# EUROPÄISCHE PATENTANMELDUNG

(11) **EP 1 069 069 A2**
(43) Veröffentlichungstag der Anmeldung: **17.01.2001**
(21) Anmeldenummer: 00112283.7
(22) Anmeldetag: 08.06.2000
(51) Int. Cl.: C01B 3/24, C01B 3/26

(54) **Vorrichtung zur Erzeugung von Wasserstoffgas**

(30) Priorität: 06.07.1999 DE 19931104
(71) Anmelder: Bayerische Motoren Werke Aktiengesellschaft, 80809 München (DE)
(72) Erfinder: Ringler, Jürgen, 86438 Kissing (DE); Fischer, Gregor, 86737 Ismaning (DE)

(57) **Zusammenfassung**

Für eine Vorrichtung zur Erzeugung von Wasserstoffgas, wobei das Wasserstoffgas mittels eines Reaktors durch Cracken von Kohlenwasserstoff-Brennstoffen erzeugt ist und gegebenenfalls der Reaktor mit einem Katalysator zusammenwirkt, wird zur Verwendung einer derartigen Vorrichtung an Bord eines Kraftfahrzeuges vorgeschlagen, daß der Crack-Reaktor mit einem Kraftstoffsystem des Kraftfahrzeuges kombiniert ist und der Crack-Vorgang so gesteuert ist, daß neben Wasserstoffgas flüssiger Restbrennstoff erzeugt ist, der dem ungecrackten Brennstoff im Kraftstoffsystem gesteuert zudosiert ist.

## Beschreibung

Die Erfindung bezieht sich nach dem Oberbegriff des Patentanspruches 1 auf eine Vorrichtung zur Erzeugung von Wasserstoffgas, wobei das Wasserstoffgas mittels eines Reaktors durch Cracken von Kohlenwasserstoff-Brennstoffen erzeugt ist, und gegebenenfalls der Reaktor mit einem Katalysator zusammenwirkt.

Eine derartige Vorrichtung ist bspw. in der DE2453089A1 beschrieben in Verbindung mit einem hierfür vorgeschlagenen Katalysator. Gegenüber der bekannten Erzeugung von Wasserstoffgas durch Reformieren eines Kohlenwasserstoff-Brennstoffes, wie bspw. Benzin oder Diesel, wird bei der Erzeugung von Wasserstoffgas durch Cracken eines derartigen Kohlenwasserstoff-Brennstoffes hervorgehoben, daß das Cracken ohne Zugaben eines Oxidationsmittels wie Luft oder Wasser durchführbar ist. Erzielt ist damit ein relativ reines Wasserstoffgas ohne schädliche Bestandteile für den Betrieb des jeweiligen Wasserstoffgas-Verbrauchers.

Der Erfindung liegt die Aufgabe zugrunde, eine gattungsgemäße Vorrichtung für eine Anordnung an Bord eines mit einer Brennkraftmaschine ausgerüsteten Fahrzeuges auszubilden.

Gelöst ist diese Aufgabe mit dem Patentanspruch 1 dadurch, daß ein an Bord eines Kraftfahrzeuges vorgesehener Reaktor über eine Brennstoff-Zuleitung mit einem Tank eines Kraftstoffsystems des Kraftfahrzeuges in Verbindung steht und in der Zuleitung eine den Brennstoff auf Crack-Temperatur erhitzende Einrichtung angeordnet ist, daß ferner der Reaktor über eine Ableitung mit einem das über einen Wärmetauscher abgekühlte Reaktionsgemisch aus Wasserstoffgas und gecracktem Restbrennstoff aufnehmenden Dampfabscheider in Verbindung steht, wobei der Dampfabscheider mit einer das Wasserstoffgas in einen Speicher einer jeweiligen Wasserstoff-Verbrauchsstelle überführenden Pumpe bzw. Verdichter verbunden ist.

Mit dem erfindungsgemäß durch Cracken an Bord des Fahrzeuges erzeugten Wasserstoffes bzw. Wasserstoffgas aus einem an Bord mitgeführten Brennstoff für die Brennkraftmaschine ist in vorteilhafter Weise ein vereinfachtes Betanken erzielt, wobei sich eine zusätzliche Infrastruktur erübrigt. Da außerdem bei diesem Verfahren reiner Wasserstoff produziert ist, ohne daß CO, CO₂ oder Noₓ entsteht und somit schädliche Anteile im Wasserstoff vermieden sind, ist somit in vorteilhafter Weise die Gefahr der Zerstörung einer an Bord mitgeführten Brennstoffzelle vermieden. Weiter ist der Crack-Prozeß frei von nachteiligen Emissionen. Da weiter der Wasserstoff bzw. das Wasserstoffgas weder durch N₂ noch durch O₂ verdünnt ist, ergibt sich in vorteilhafter Weise ein vereinfachter Betrieb der Brennstoffzelle mit höherer Effizienz sowie auch eine vorteilhaft vereinfachte Verwendung dieses Wasserstoffgases für andere Verbraucher an Bord des Kraftfahrzeuges, wie bspw. zum Vorheizen eines Abgas-Katalysators der Brennkraftmaschine.

Weitere vorteilhafte Ausgestaltungen der Vorrichtung sind in weiteren Ansprüchen beschrieben.

Die Erfindung ist anhand einer schematischen Darstellung der erfindungsgemäßen Vorrichtung in einem Kraftstoffsystem eines Kraftfahrzeuges beschrieben.

Eine Vorrichtung 11' zur Erzeugung von Wasserstoffgas umfaßt einen Reaktor 11 zum Cracken von Kohlenwasserstoff-Brennstoffen wie bspw. Benzin oder Diesel, wobei der Reaktor 11 zur Absenkung der Prozeß-Temperatur zweckmäßigerweise mit einem nicht dargestellten Katalysator zusammenwirkt.

Zum Einsatz dieser Vorrichtung 11' an Bord eines mit einer nicht gezeigten Brennkraftmaschine ausgerüsteten Fahrzeuges bzw. Kraftfahrzeuges steht der Reaktor 11 über eine Brennstoff-Zuleitung 8, 8a mit einem Tank 1 eines Kraftstoffsystems 1' des Kraftfahrzeuges in Verbindung, wobei in der Zuleitung 8, 8a eine den Brennstoff auf Crack-Temperatur erhitzende Einrichtung 10 angeordnet ist, die bspw. als ein Wärmetauscher oder eine Heizeinrichtung 10 gestaltet sein kann. Ferner steht der Reaktor 11 über eine Ableitung 13' mit einem das über einen Wärmetauscher 12 abgekühlte Reaktionsgemisch aus Wasserstoffgas und gecracktem Restbrennstoff aufnehmenden Dampfabscheider 14 in Verbindung, wobei der Dampfabscheider 14 mit einer das Wasserstoffgas in einen Speicher 17 einer jeweiligen Wasserstoff-Verbrauchstelle überführenden Pumpe bzw. Verdichter 16 verbunden ist.

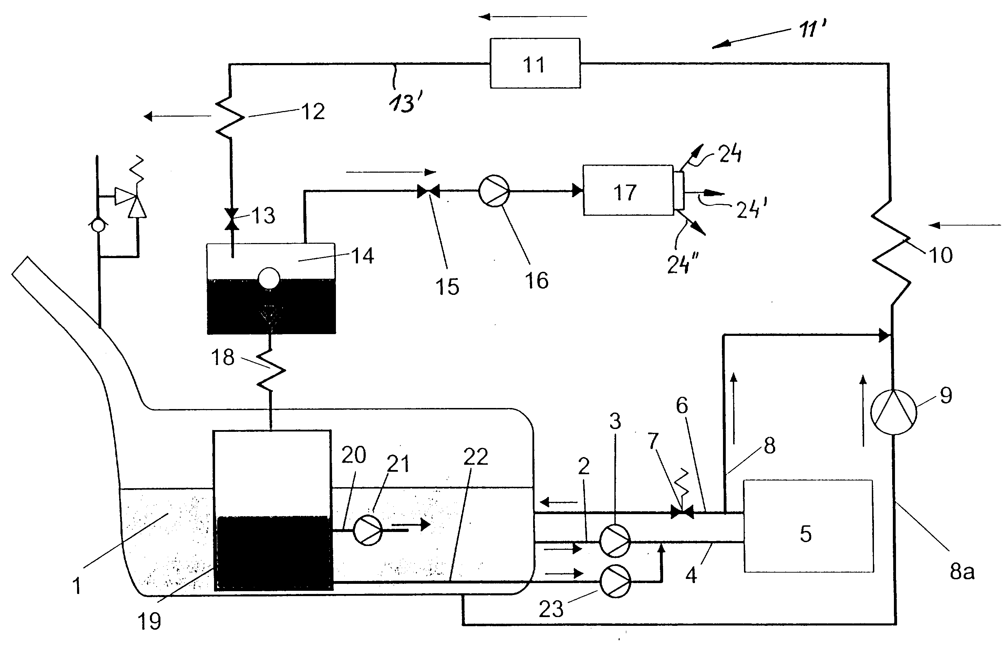

Wie aus der einzigen Figur ersichtlich, umfaßt das Kraftstoffsystem 1' einen Tank 1, aus dem über eine Saugleitung 2 über eine Kraftstoffförderpumpe 3 Brennstoff mit Druck über die Leitung 4 einer Brennkraftmaschine 5 zugeführt ist. Überschüssiger Brennstoff bzw. Kraftstoff ist über eine Rückführleitung 6 in den Tank 1 zurückgeführt, wobei ein in der Rückführleitung 6 angeordnetes Druckhalteventil 7 den vorbestimmten Kraftstoffdruck aufrecht erhält.

In einer ersten Ausgestaltung kann die Brennstoff-Zuleitung 8 für den Reaktor 11 stromauf das Druckhalteventil 7 an die Rückführleitung 6 angeschlossen sein. In einer weiteren Ausgestaltung ist an den Tank 1 ein gesonderter Abschnitt einer Zuführleitung 8a vorgesehen zu einer Förderpumpe 9, die im Tank 1 bevorrateten Kraftstoff bzw. Brennstoff direkt über die Heizeinrichtung 10 dem Reaktor bzw. Reaktorsystem 11 zuführt.

Der dem Reaktor 11 nachgeschaltete Dampfabscheider 14 dient der Trennung des gasförmigen Wasserstoffs von dem flüssigen, gecrackten Restbrennstoff, der bei einer Otto-Brennkraftmaschine 5 flüssiges Crackbenzin ist. Zu dessen gesteuerter Wiederverwendung im entsprechenden Verhältnis zu dem im Tank 1 bevorrateten Kraftstoff steht der Dampfabscheider 14 mit einem gesonderten Sammelbehälter 19 für gecrackten Restbrennstoff in Verbindung, wobei der Restbrennstoff mittels einer Pumpe 21 dosiert dem Inhalt des Fahrzeug-Tanks 1 und/oder dem ungecrackten Brennstoff bzw. Kraftstoff im Vorlauf bzw. in die Druckleitung 4 zur Brennkraftmaschine 5 zugemischt ist.

Um zusätzlichen Raumbedarf zu vermeiden, ist der gesonderte Sammelbehälter 19 im Fahrzeug-Tank 1 angeordnet, wobei der Dampfabscheider 14 zur Vermeidung einer Erwärmung des Tankinhaltes unter Zwischenschaltung eines Wärmetauschers 18 mit dem Sammelbehälter 19 in Verbindung steht.

Zur Reduzierung des Energieaufwandes für den Wärmetauscher bzw. die Heizeinrichtung 10 zur Erhitzung des Brennstoffes bzw. Kraftstoffes auf Crack-Temperatur kann die in den Wärmetauschern 12 und 18 rückgewonnene Wärmenergie in geeigneter Weise der Heizeinrichtung 10 zugeführt sein.

Für die Verwendung des aus gecracktem Kraftfahrzeug-Kraftstoffes gewonnenen Wasserstoffgases weist der Wasserstoffgas-Speicher 17 vorteilhafterweise eine steuerbare Entnahmeeinrichtung auf mit Anschlüssen 24, 24', 24'' für eine an Bord angeordnete, nicht dargestellte Brennstoffzelle und/oder für die Brennkraftmaschine 5 insbesondere für den Kaltstartbetrieb und/oder für eine nicht gezeigte Vorheizeinrichtung eines nicht dargestellten Abgas-Katalysators der Brennkraftmaschine 5.

Vorzugsweise ist die nicht dargestellte Brennstoffzelle als eine als Strom/Spannungsquelle für das Bordnetz des Fahrzeuges dienende Hilfseinrichtung gestaltet. Zusammenfassend ist mit der Erfindung erreicht,
- daß der Wasserstoff an Bord des Fahrzeuges aus dem normalen Betriebskraftstoff durch einen Crackprozeß in Wasserstoff und flüssiges Restbenzin hergestellt ist,
- daß durch die verschiedenen Aggregatzustände das Wasserstoffgas ohne großen technischen Aufwand vom flüssigen Crackbrennstoff abgetrennt werden kann,
- daß reiner Wasserstoff für die Brennstoffzelle oder für Einrichtungen zur Emissionsreduktion erzielt ist und
- daß nachgetankter Kraftstoff und gecrackter Restbrennstoff im Tank zunächst lokal getrennt und mittels einer Pumpe im Tank oder in der Druckleitung vor dem Verbrennungsmotor im beliebigen Verhältnis gemischt werden können.

## Patentansprüche

1. Vorrichtung zur Erzeugung von Wasserstoffgas,
- wobei das Wasserstoffgas mittels eines Reaktors (11) durch Cracken von Kohlenwasserstoff-Brennstoffen erzeugt ist, und
- ggf. der Reaktor (11) mit einem Katalysator zusammenwirkt,
**dadurch gekennzeichnet,**
- daß ein an Bord eines Kraftfahrzeuges vorgesehener Reaktor (11) über eine Brennstoff-Zuleitung (8, 8a) mit einem Tank (1) eines Kraftstoffsystems (1') des Kraftfahrzeuges in Verbindung steht und
- in der Zuleitung (8, 8a) eine den Brennstoff auf Crack-Temperatur erhitzende Einrichtung (10) angeordnet ist, daß ferner
- der Reaktor (11) über eine Ableitung (13') mit einem das über einen Wärmetauscher (12) abgekühlte Reaktionsgemisch aus Wasserstoffgas und gecracktem Restbrennstoff aufnehmenden Dampfabscheider (14) in Verbindung steht, wobei
- der Dampfabscheider (14) mit einer das Wasserstoffgas in einen Speicher (17) einer jeweiligen Wasserstoff-Verbrauchstelle überführenden Pumpe (Verdichter 16) verbunden ist.

2. Vorrichtung nach Anspruch 1, **dadurch gekennzeichnet,** daß der Dampfabscheider (14) mit einem gesonderten Sammelbehälter (19) für gecrackten Restbrennstoff in Verbindung steht, wobei der Restbrennstoff mittels einer Pumpe (21) dosiert dem Inhalt des Fahrzeugs-Tanks (1) und/oder dem ungecrackten Brennstoff im Vorlauf (Druckleitung 4) zu einer Brennkraftmaschine (5) zugemischt ist.

3. Vorrichtung nach Anspruch 2, **dadurch gekennzeichnet,**
- daß der gesonderte Sammelbehälter (19) im Fahrzeug-Tank (1) angeordnet ist und
- mit dem Dampfabscheider (14) unter Zwischenschaltung eines Wärmetauschers (18) in Verbindung steht.

4. Vorrichtung nach den Ansprüchen 1 bis 3, **dadurch gekennzeichnet,**
- daß die Brennstoff-Zuleitung (8, 8a) mit einer zwischen der Brenn-kraftmaschine (5) und dem Tank (1) vorgesehenen, druckbeaufschlagten Rücklaufleitung (6) und/oder
- stromauf einer Förderpumpe (9) mit einem am Tank (1) angeschlossenen Abschnitt der Zuleitung (8a) in Verbindung steht.

5. Vorrichtung nach den Ansprüchen 1 bis 4, **dadurch gekennzeichnet,** daß der Wasserstoffgas-Speicher (17) eine steuerbare Entnahmeeinrichtung aufweist mit Anschlüssen (24, 24', 24'') für eine Brennstoffzelle und/oder für eine Brennkraftmaschine (5) und/oder für eine Vorheizeinrichtung eines Brennkraftmaschinen-Abgaskatalysators.

6. Vorrichtung nach Anspruch 1, **dadurch gekennzeichnet,** daß die Brennstoffzelle als eine als Strom-/Spannungsquelle für das Bordnetz des Fahrzeuges dienende Hilfseinrichtung gestaltet ist.

7. Verfahren zur Erzeugung von Wasserstoffgas mittels der Vorrichtung nach Anspruch 1, **dadurch gekennzeichnet,**
- daß das Cracken von Kohlenwasserstoff-Brennstoff im Reaktor (11) derart gesteuert ist, daß
- einerseits Wasserstoffgas (H₂) und andererseits mit dem Kraftstoffvorrat im Tank (1) des Kraftstoffsystems (1') mischbarer Restbrennstoff erzeugt ist.
